# EUROPÄISCHE PATENTSCHRIFT

(11) **EP 2 999 947 B1**
(45) Veröffentlichungstag und Bekanntmachung des Hinweises auf die Patenterteilung: **28.11.2018**
(21) Anmeldenummer: 14720947.2
(22) Anmeldetag: 25.04.2014
(51) Int. Cl.: G01F 1/66, G01F 15/18, G10K 11/00

(54) **ULTRASCHALL-DURCHFLUSSMESSGERÄT MIT ZWEI ULTRASCHALLWANDLER-MONTAGEANORDNUNGEN**
ULTRASONIC FLOWMETER WITH TWO ULTRASONIC TRANSDUCER MOUNTING ASSEMBLIES
DÉBITMÈTRE À ULTRASONS AVEC DEUX ENSEMBLES DE MONTAGE D'UN CONVERTISSEUR À ULTRASONS

(30) Priorität: 21.05.2013 DE 102013105169; 24.05.2013 DE 102013105329
(43) Veröffentlichungstag der Anmeldung: 30.03.2016
(73) Patentinhaber: Endress+Hauser Flowtec AG, 4153 Reinach (CH)
(72) Erfinder: UEBERSCHLAG, Pierre, F-68300 Saint-Louis (FR); BEZDEK, Michal, CH-4147 Aesch (CH); BERGER, Andreas, 79686 Hasel-Glashütten (DE)
(74) Vertreter: Andres, Angelika Maria
(86) Internationale Anmeldenummer: PCT/EP2014/058441
(87) Internationale Veröffentlichungsnummer: WO 2014/187645

(56) Entgegenhaltungen:
- EP-A1- 2 146 190
- DE-A1-102007 022 513
- DE-A1-102008 055 126
- US-A- 5 602 718
- US-A- 5 626 138
- US-A1- 2011 162 461

## Beschreibung

Die Erfindung bezieht sich auf ein Ultraschall-Durchflussmessgerät mit zwei Ultraschallwandler-Montageanordnungen gemäß dem Oberbegriff des Anspruchs 1.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen. Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden können. Die Ultraschallwandler bestehen normalerweise aus einem elektromechanischen Wandlerelement, z.B. einen piezoelektrischen Element, und einer Koppelschicht. Bei Clamp-On-Systemen werden im elektromechanischen Wandlerelement die Ultraschallwellen als akustische Signale erzeugt und über die Koppelschicht zur Rohrwandung geführt und von dort in die Flüssigkeit geleitet. Bei Inline-Systemen werden die akustischen Signale über die Koppelschicht in das Messmedium eingekoppelt. Sowohl bei Clamp-On-Systemen, als auch bei Inline-Systemen sind die Ultraschallwandler üblicherweise in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert.

Beim Laufzeitdifferenz-Prinzip finden zwei Vorgänge statt. Beim ersten Vorgang sendet ein erster Ultraschallwandler akustische Signale in das Messrohr, die sich durch das Medium ausbreiten. Die akustischen Signale werden von einem zweiten Ultraschallwandler empfangen. Beim zweiten Vorgang sendet der zweite Ultraschallwandler akustische Signale aus, die von dem zweiten Ultraschallwandler empfangen werden. Fließt ein Medium durch das Messrohr ergeben sich unterschiedliche Laufzeiten für den ersten und für den zweiten Vorgang. Aus diesen beiden Laufzeiten wird die Fließgeschwindigkeit des Mediums im Messrohr ermittelt. Der sendende Ultraschallwandler erzeugt neben dem akustischen Signal auch ein akustisches Rauschen, das von einem Ultraschall-Wandlergehäuse an das Messrohr und über das Messrohr an den empfangenden Ultraschallwandler übertragen wird. Klassischerweise wird das Ultraschall-Wandlergehäuse mit Dämpfern aus Polymer oder aus Elastomeren vom Messrohr entkoppelt um die Übertragung des akustischen Rauschens zu minimieren. Polymere oder Elastomere sind jedoch von niedriger Festigkeit und Beständigkeit.

Die Patentschriften US 2011/162461 und DE 10 2008 055126 offenbaren jeweils ein Ultraschall-Durchflussmessgerät mit Ultraschallwandlern.

Die Aufgabe wird erfindungsgemäß durch ein Ultraschall-Durchflussmessgerät mit zwei Ultraschallwandler-Montageanordnungen gemäß Anspruch 1 gelöst. Die erfindungsgemäße Ultraschallwandler-Montageanordnung weist ein Ultraschallwandlerelement, ein Wandlergehäuse, in welchem das Ultraschallwandlerelement angeordnet ist, und eine Aufnahmeeinheit auf, wobei das Wandlergehäuse in der Aufnahmeeinheit in einer Einspannstrecke eingespannt ist, wobei die Einspannstrecke erfindungsgemäß mindestens ein Wälzkörperlager mit mindestens einem Wälzkörper, insbesondere mindestens ein Kugellager mit mindestens einer Kugel, zur akustischen Entkopplung des Wandlergehäuses von der Aufnahmeeinheit umfasst.

Die Einspannstrecke ist allgemein als eine Anordnung von Körpern definiert, die gegeneinander eingespannt sind. Durch Verwendung von Wälzkörpern wird die Kontaktfläche zwischen Wandlergehäuse und Aufnahmeeinheit minimiert, wodurch die akustische Kopplung vom Wandlergehäuse und Aufnahmeeinheit minimiert wird. Bestehen die Wälzkörper aus Kugeln, gelangt der Schall durch einen quasi punktförmigen Kontakt zwischen der Aufnahmeeinheit und der Kugel in die Kugel und breitet sich in alle Richtungen aus. An einer dem Eintrittspunkt gegenüberliegenden Seite der Kugel findet fast ausschließlich eine Reflektion der Schallwellen statt, da es an dieser Seite der Kugel ebenfalls lediglich einen quasi punktförmigen Kontakt zwischen der Kugel und der Aufnahmeeinheit existiert. Die in die Kugel eingetretenen Schallwellen werden so lange in der Kugel reflektiert, bis die Schallwellen abgeklungen sind. Das Wälzkörperlager kann aufgrund der Wälzkörper beweglich oder starr ausgebildet sein.

Gemäß einer Weiterbildung weist das Wandlergehäuse mindestens eine erste Einspannfläche und die Aufnahmeeinheit mindestens eine zweite Einspannfläche auf, wobei ein Wälzkörperlager aus einer Einspannfläche des Wandlergehäuses und einer Einspannfläche der Aufnahmeeinheit und Wälzkörpern zwischen den beiden Einspannflächen gebildet ist.

Gemäß einer Weiterbildung sind die Wälzkörper des Wälzkörperlagers fassförmig ausgebildet.

Gemäß einer Weiterbildung ist das Wandlergehäuse in der Aufnahmeeinheit in der Einspannstrecke mittels mindestens einer Feder, insbesondere mittels mindestens einer Tellerfeder und/oder mittels mindestens einer Schraubenfeder, vorgespannt.

Gemäß einer Weiterbildung umfassen die Wälzkörper des Wälzkörperlagers Metall, Keramik, Kunststoff, Glas oder ein Komposit.

Gemäß einer Weiterbildung weist das Wandlergehäuse eine erste und eine zweite Einspannfläche und die Aufnahmeeinheit eine erste und eine zweite Einspannfläche auf, wobei ein erstes Wälzkörperlager aus Wälzkörpern zwischen der ersten Einspannfläche des Wandlergehäuses und der ersten Einspannfläche der Aufnahmeeinheit gebildet ist und ein zweites Wälzkörperlager aus Wälzkörpern zwischen der zweiten Einspannfläche des Wandlergehäuses und der zweiten Einspannfläche der Aufnahmeeinheit gebildet ist.

Für die einfache Montage und Demontage der Montageanordnung ist es von Vorteil, wenn das Wälzlager mehrere Wälzkörper umfasst, die durch einen Lagerring oder einen insbesondere zylindrischen Deckel gefasst sind. Alternative Deckelformen z.B. ovale Deckel sind ebenfalls denkbar. Dabei kann der Lagerring Teil des Wälzlagers sein. Der Deckel ist eher dem Wandlergehäuse zuzuordnen. Vorzugsweise bildet die Innenwandung des Deckels selbst die Fassung der Wälzkörper. Die Anorndung im Deckel hat den zusätzlichen Vorteil einer Materialersparnis.

Es ist von Vorteil, wenn der Lagerring oder der Deckel eine Mittelachse aufweist und dass die Wälzkörper derart gefasst sind, dass eine radiale Bewegung der Wälzkörper gegenüber der Mittelachse blockiert oder begrenzt ist. Dadurch können die Wälzkörper als eine Art Wälzkörperpaket in die Montageanordnung eingesetzt werden.

Die Blockade oder die Begrenzung kann entweder durch das Zusammenspiel der Wälzkörper selbst erfolgen, was eine Materialersparnis zur Folge hat. Alternativ kann die Blockade oder Begrenzung durch eine Mittelfassung, vorzugsweise einen Ring erfolgen. Dieser ist innerhalb des Lagerrings angeordnet. Dabei kann das Wälzlager als ein handelsübliches Kugellager ausgebildet sein, welches als Massenprodukt in verschiedenen Größen kommerziell und kostengünstig verfügbar ist. Insbesondere bei der Deckelform kann ein O-Ring genutzt werden, welcher innerhalb des Lagerrings des Deckels, beispielsweise in einer Ringnut, angeordnet ist.

Gemäß einer Weiterbildung der Ultraschallmessanordnung ragt die Aufnahmeeinheit zumindest teilweise in das Messrohr oder in den Behälter hinein.

Die Aufgabe der Erfindung wird ebenfalls durch ein Ultraschall-Durchflussmessgerät mit einer erfindungsgemäßen Ultraschallmessanordnung gelöst. Das erfindungsgemäße Ultraschall-Durchflussmessgerät umfasst mindestens eine erste und eine zweite erfindungsgemäße Ultraschallwandler-Montageanordnung, welche in der Weise an dem Messrohr angeordnet sind, dass Ultraschall-Signale durch das Volumen des mit einem Medium durchströmten Messrohrs von einem ersten Ultraschallwandler der ersten Ultraschallwandler-Montageanordnung zu einem zweiten Ultraschallwandler der zweiten Ultraschallwandler-Montageanordnung und umgekehrt verlaufen können.

Die Erfindung wird anhand der nachfolgenden Zeichnungen näher erläutert. Es zeigt:
Fig. 1: einen Längsschnitt durch eine Ultraschallwandler-Montageanordnung nach dem Stand der Technik,
Fig. 2: einen Längsschnitt durch eine erste erfindungsgemäße Ultraschallwandler-Montageanordnung,
Fig. 3: einen Längsschnitt durch eine erfindungsgemäße Ultraschallwandler-Montageanordnung, die in einem Messrohr integriert ist,
Fig. 3a: einen Längsschnitt durch einen vergrößerten Bereich der in einem Messrohr integrierten Ultraschallwandler-Montageanordnung,
Fig. 4: einen Längsschnitt durch eine weitere Ausführungsform einer erfindungsgemäßen Ultraschallwandler-Montageanordnung,
Fig. 4a: einen Längsschnitt durch einen vergrößerten Bereich eines Kugellagers einer Ultraschallwandler-Montageanordnung nach Fig. 4,
Fig. 5: einen Längsschnitt durch eine weitere Ausführungsform einer erfindungsgemäßen Ultraschallwandler-Montageanordnung mit einem Zentrierring,
Fig. 6: eine zweite erfindungsgemäße Ultraschallwandler-Montageanordnung, die lediglich einen Wälzkörper aufweist;
Fig. 7: eine dritte.erfindungsgemäße Ultraschallwandler-Montageanordnung;
Fig. 8a-e): ein Wälzlager für eine vierte erfindungsgemäße Ultraschallwandler-Montageanordnung; und
Fig. 9a-d); ein Wälzlager für eine fünfte erfindungsgemäße Ultraschallwandler-Montageanordnung.

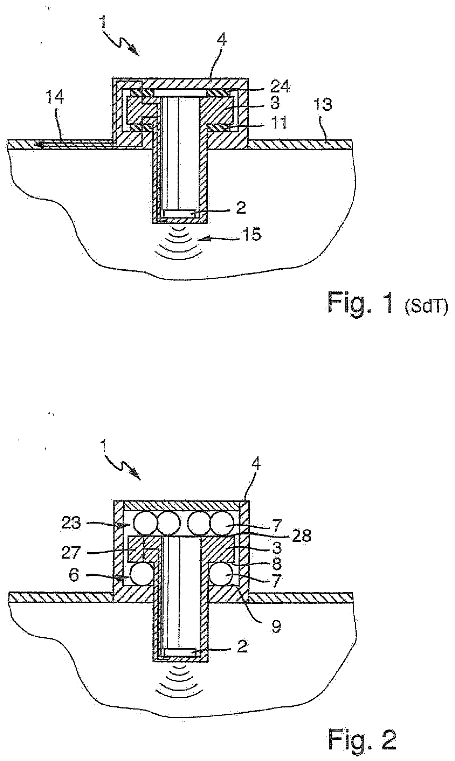

Fig. 1 zeigt einen Längsschnitt durch eine Ultraschallwandler-Montageanordnung 1 nach dem Stand der Technik. Ein hohlzylindrisches Wandlergehäuse 3 weist an einer inneren ersten Stirnfläche ein Ultraschallwandlerelement 2 auf. Das Ultraschallwandlerelement 2 ist aus einem piezoelektrischen Material ausgebildet, um akustische Signale 15 durch die erste Stirnfläche des Wandlergehäuses 3 auszusenden. An einem, der ersten Stirnfläche des Wandlergehäuses 3 gegenüberliegenden Endbereich des Wandlergehäuses 3 weist das Wandlergehäuse 3 einen Flansch 27 auf. Das Wandlergehäuse 3 ragt teilweise in ein Messrohr 13, so dass das Ultraschallwandlerelement 2 in dem Messrohr 13 und der Flansch 27 außerhalb des Messrohrs 13 angeordnet sind. Der aus dem Messrohr 13 herausragende Teil des Wandlergehäuses 3 ist von einer Aufnahmeeinheit 4 umgeben, wobei die Aufnahmeeinheit 4 zylinderförmig ausgebildet ist und an einer ersten Stirnfläche an dem Messrohr 13 angeordnet ist. Innerhalb der Aufnahmeeinheit 4 wird der Flansch 27 mittels eines ersten und eines zweiten O-Rings 11, 24 gehalten, wobei der erste O-Ring 11 zwischen einer, an dem Messrohr 13 anliegenden Innenfläche der Aufnahmeeinheit 4 und der Flansch 27 angeordnet ist und der zweite O-Ring 24 zwischen dem Flansch 27 und an einer, dem Messrohr 13 gegenüberliegenden inneren Stirnfläche der Aufnahmeeinheit 4 angeordnet ist.

Der Ultraschallwandler 2 sendet Ultraschallsignale 15 aus, die sich im Medium des Messrohrs 13 ausbreiten und einen zweiten Ultraschallwandler einer zweiten Ultraschallwandler-Montageanordnung zur Laufzeitbestimmung erreichen. Die Ultraschallsignale 15 breiten sich ebenfalls durch das Wandlergehäuse 3 , die Aufnahmeeinheit 4 und das Messrohr 13 in Form eines akustischen Rauschens 14 aus. Dieses Rauschen 14 wird erfindungsgemäß unterdrückt.

Fig. 2 zeigt einen Längsschnitt durch eine erfindungsgemäße Ultraschallwandler-Montageanordnung. Anstelle des ersten und des zweiten O-Rings 11, 24 der Ausgestaltung entsprechend Fig. 1, wird der Flansch 27 von Wälzkörpern 7, die als Kugeln ausgebildet sind, in der Aufnahmeeinheit 4 gehalten. Die Wälzkörper 7 , die Aufnahmeeinheit 4 und das Wandlergehäuse 3 sind metallisch, insbesondere aus Stahl ausgebildet.

Die innere an dem Messrohr 13 anliegende Stirnfläche der Aufnahmeeinheit 4 definiert eine erste Einspannfläche 9 der Aufnahmeeinheit 4 . Die dem Messrohr 13 zugewandte Seite des Flansches 27 definiert eine erste Einspannfläche 8 des Wandlergehäuses 3. Die erste Einspannfläche 8 des Wandlergehäuses 3 und die erste Einspannfläche 9 der Aufnahmeeinheit 4 mit den Wälzkörpern 7 dazwischen definieren ein erstes Wälzkörperlager 6, dessen Wälzkörper zwischen dem Flansch 27 und der inneren an dem Messrohr 13 anliegenden Stirnfläche der Aufnahmeeinheit 4 drehbar gelagert sind. Auf die Drehbarkeit kommt es jedoch im Zusammenhang mit der vorliegenden Erfindung nicht an.

Die dem Messrohr 13 abgewandte Fläche des Flansches 27 definiert eine zweite Einspannfläche 28 des Wandlergehäuses 3 . Die dem Messrohr 13 zugewandte, innere Fläche der Aufnahmeeinheit 4 definiert eine zweite Einspannfläche der Aufnahmeeinheit 4 . Die zweite Einspannfläche des Wandlergehäuses 3 und die zweite Einspannfläche der Aufnahmeeinheit 4 mit den Wälzkörpern 7 dazwischen definieren ein zweites Wälzkörperlager 23.

Die Wälzkörper 7 des ersten und des zweiten Wälzkörperlagers 6, 23 sind dermaßen gelagert, dass das Wandlergehäuse 3 um seine Längsachse 5 drehbar gelagert ist. Unabhängig von dem ersten und dem zweiten Wälzkörperlager 6, 23 kann ein drittes

Wälzkörperlager, welches hier nicht dargestellt ist, radial an dem Flansch 27 angeordnet sein.

Auf diese Weise weist die Lagerung des Wandlergehäuses 3 in der Aufnahmeeinheit 4 eine hohe Festigkeit und eine hohe Beständigkeit auf und gleichzeitig weisen die quasi punktförmigen Kontakte zwischen den Wälzkörpern 7 und der Aufnahmeeinheit 4 bzw. der Flansch 27 des Wandlergehäuses 3 eine Verengung des Schallwegs auf, so dass das Rauschen 14 des akustischen Signals weitestgehend unterdrückt wird.

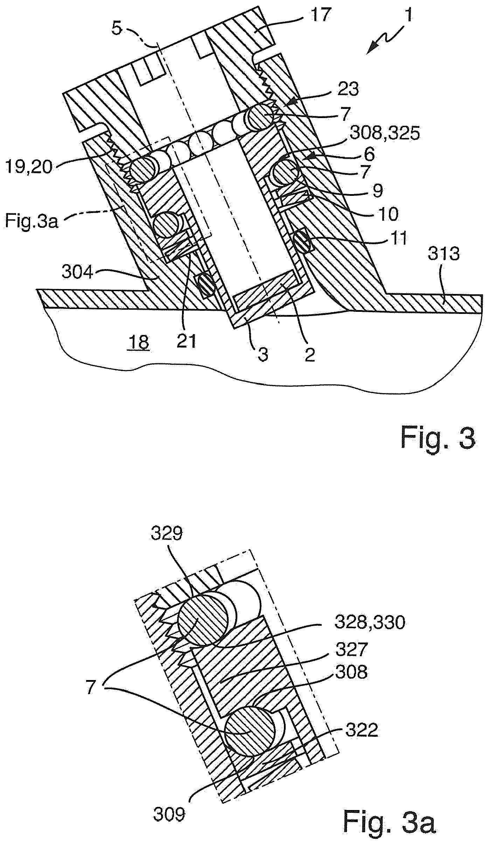

Fig. 3 und Fig. 3a zeigen einen Längsschnitt bzw. einen vergrößerten Ausschnitt eines Längsschnitts durch einen Ausführungsbeispiel der erfindungsgemäßen Ultraschall-Montageanordnung 1 entsprechend der allgemeinen Struktur in Fig. 2, die in einem Messrohr 313 integriert ist. In diesem Ausführungsbeispiel sind eine Aufnahmeeinheit 304 und das Messrohr 313 einstückig ausgebildet. Eine Längsachse 5 des Wandlergehäuses 3 ist schräg zu einer Längsachse des Messrohrs 313 angeordnet. Die Aufnahmeeinheit 304 weist eine Längsachse 5 auf, die mit der Längsachse 5 des Wandlergehäuses 3 übereinstimmt.

Innerhalb der Aufnahmeeinheit 304 ist passend zu einem Flansch 327 eine ringförmige erste Schulter 21 angeordnet, welche den Flansch 327 hält. Zwischen dem Flansch 327 und der ersten Schulter 21 sind eine Tellerfeder 10, ein Schulterring 322 und Wälzkörper 7 angeordnet. Der Flansch 327 weist in Richtung des Messrohrs 313 eine zweite Schulter 325 auf, die eine erste Einspannfläche 308 des Wandlergehäuses 3 definiert. Der Schulterring 322 weist eine ringförmige Aushebung auf, die eine erste Einspannfläche 309 der Aufnahmeeinheit 304 definiert. Die erste Einspannfläche 308 des Wandlergehäuses 3 und die erste Einspannfläche 309 der Aufnahmeeinheit 304 definieren zusammen mit den Wälzkörpern 7 dazwischen das erste Wälzkörperlager 6.

In einem Abschnitt zwischen der ersten Schulter 21 und dem Messrohr 313 ist ein O-Ring 11 angeordnet, damit ein Medium 18 aus dem Messrohr 313 nicht in das Innere der Aufnahmeeinheit 304 gelangen kann. Der O-Ring 11 ist insbesondere zwischen einer Mantelfläche des Wandlergehäuses und einer gegenüberliegenden Wand der Aufnahmeeinheit 304 eingespannt.

An einem, dem Messrohr 313 gegenüberliegenden zweiten Endbereich der Aufnahmeeinheit 304 ist ein erstes Gewinde 19 angeordnet. Ein Niederhalter 17, der ein zweites Gewinde 20 passend zu dem ersten Gewinde 19 aufweist, verschließt die Aufnahmeeinheit 304 an dem zweiten Endbereich. Zwischen dem Niederhalter 17 und der Flansch 327 sind Wälzkörper 7 angeordnet.

An einer, dem Messrohr 313 abgewandten Stirnfläche des Wandlergehäuses 3 ist eine erste ringförmige Rille 30 angeordnet, die eine zweite Einspannfläche 328 des Wandlergehäuses 3 definiert. Eine dem Messrohr 313 zugewandte Stirnfläche des Niederhalters 17 definiert eine zweite Einspannfläche 329 der Aufnahmeeinheit 4. Die zweite Einspannfläche 328 des Wandlergehäuses 3 und die zweite Einspannfläche 329 der Aufnahmeeinheit 4 mit den Wälzkörpern 7 dazwischen definieren das zweite Wälzkörperlager 23.

Um einen nahezu punktförmigen Kontakt zwischen den Wälzkörpern 7 und ihren Einspannflächen 308, 309, 328, 329 herzustellen, weisen die Einspannflächen 308, 309, 328, 329 einen größeren Krümmungsradius auf als die Wälzkörper 7.

Beim Zuschrauben der Aufnahmeeinheit 304 mit dem Niederhalter 17 wird Druck auf die Wälzkörper 7 des zweiten Wälzkörperlagers 23 ausgeübt, der sich auf das Wandlergehäuse 3 und auf die Wälzkörper 7 des ersten Wälzkörperlagers 6 und somit auf dem Schulterring 322 und die Tellerfeder 10 überträgt. Dabei gibt die Tellerfeder 10 nach und das Wandlergehäuse 3 ist in Richtung seiner Längsachse 5 zwischen den Wälzkörpern 7 des ersten und des zweiten Wälzkörperlagers 6, 23 eingespannt.

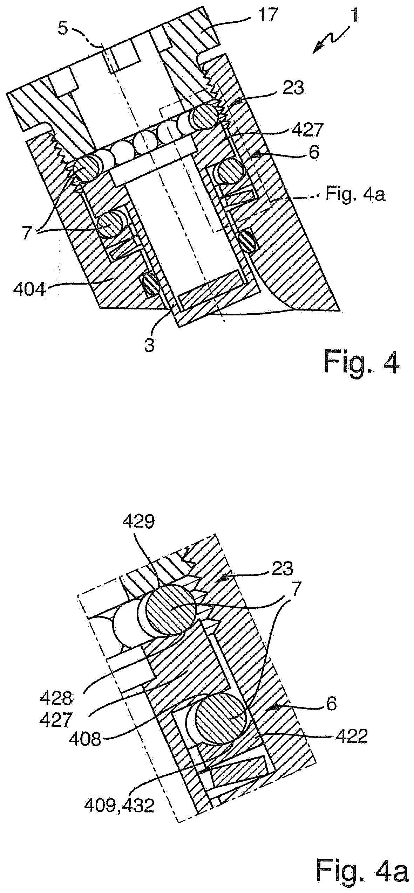

Fig. 4 und Fig. 4a zeigen einen Längsschnitt bzw. einen vergrößerten Ausschnitt eines Längsschnitts durch eine weitere Ausführungsform einer erfindungsgemäßen Ultraschallwandler-Montageanordnung 1 entsprechend Fig. 3. In diesem Ausführungsbeispiel ist eine erste Einspannfläche 408 eines Wandlergehäuses 3, die einem Messrohr 313 zugewandt ist, eben ausgebildet. Wälzkörper 7 eines ersten Wälzkörperlagers 6 sind gegen die Einspannfläche 408 eingespannt. Auf einer der Einspannfläche 408 gegenüberliegende Seite der Wälzkörper 7 des ersten Wälzkörperlagers 6 ist ein Schulterring 422 angeordnet. Der Schulterring 422 weist eine ringförmige zweite Rille 432 auf, welche die erste Einspannfläche 409 der Aufnahmeeinheit 404 definiert. Die Wälzkörper 7 des ersten Wälzkörperlagers 6 weisen einen nahezu punktförmigen Kontakt zu der ersten Einspannfläche 409 der Aufnahmeeinheit 404 auf.

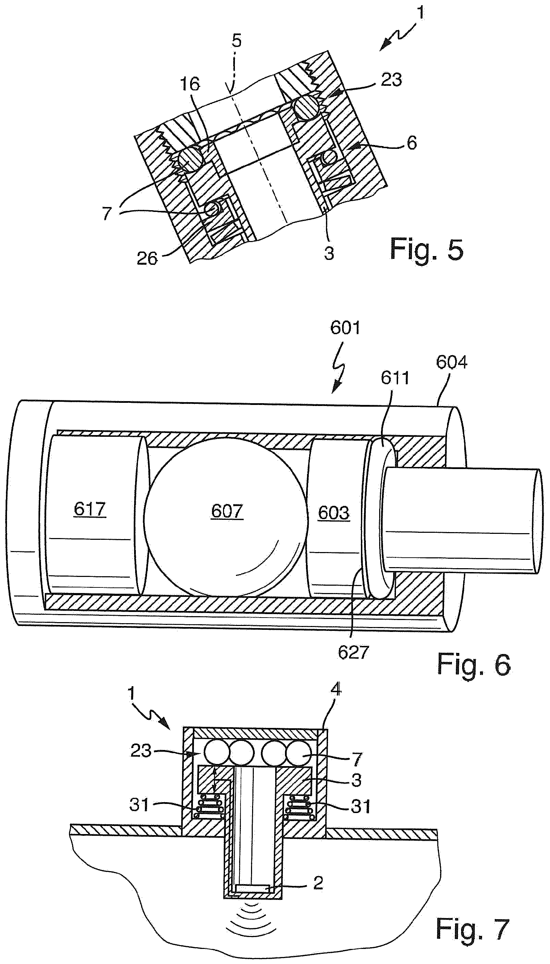

Fig. 5 zeigt einen Längsschnitt durch eine weitere Ausführungsform einer erfindungsgemäßen Ultraschallwandler-Montageanordnung 1 mit einem ersten und einem zweiten Zentrierring 16, 26. Der erste Zentrierring 16 wird an einer einem Messrohr 13 abgewandten Stirnfläche eines Wandlergehäuses 3 angeordnet und sorgt dafür, dass Wälzkörper 7 eines zweiten Wälzkörperlagers 23 in einer vordefinierten Bahn um die Längsachse 5 des Wandlergehäuses 3 gehalten werden. Der zweite Zentrierring 26 ersetzt den in Fig. 3 und 4 dargestellten Schulterring 22 und sorgt dafür, dass die Wälzkörper 7 des ersten Wälzkörperlagers 6 in einer vordefinierten Bahn um die Längsachse 5 des Wandlergehäuses 3 gehalten werden.

Fig. 6 zeigt eine Ultraschallwandler-Montageanordnung 1 mit lediglich einem kugelförmigen Wälzkörper 607. Eine Aufnahmeeinheit 604 weist an einem, einem Messrohr 13 zugewandten Endbereich eine Verengung auf, in der ein zylinderförmiger Abschnitt des Wandlergehäuses 603 angeordnet ist. Das Wandlergehäuse 603 weist an einem, in der Aufnahmeeinheit 604 angeordneten Endbereich einen Flansch 627 auf. Zwischen dem Flansch 627 und einer radialen Stufe der Verengung der Aufnahmeeinheit 604 ist ein O-Ring 11 axial eingespannt, damit ein Medium 18 aus dem Messrohr 13 nicht in das Innere der Aufnahmeeinheit 604 gelangen kann. An einer, dem Messrohr 13 gegenüberliegenden Stirnfläche des Wandlergehäuses 603 ist der kugelförmige Wälzkörper 607 angeordnet. An einem dem Wandlergehäuse 603 gegenüberliegenden Endbereich der Aufnahmeeinheit verschließt ein Niederhalter 617 die Aufnahmeeinheit 604 und spannt den Wälzkörper 607 gegen den Flansch 627.

Fig. 7 zeigt eine Ultraschallwandler-Montageanordnung 1 entsprechend Fig. 2, wobei mehrere Spiralfedern 31 zwischen dem Flansch 27 des Wandlergehäuses 3 und einer dem Messrohr 13 anliegenden Innenfläche der Aufnahmeeinheit 4 angeordnet sind. Die Spiralfeder 31 wirken entlang der Einspannstrecke federnd, so dass bei unterschiedlichen thermischen Ausdehnungen von Aufnahmeeinheit 4, Flansch 27 oder Wälzkörpern 7, der Flansch 27 entlang der Einspannstrecke eingespannt bleibt.

Die erfindungsgemäße Ultraschallwandler-Montageanordnung kann sowohl zum Messen eines Durchflusses in einem Messrohr oder zum Messen eines Füllstands in einem Behälter verwendet werden. Hierzu ist es vorteilhaft, die Ultraschallwandler-Montageanordnung in einer Ultraschallmessanordnung anzuordnen und eine elektrische Verbindung mit einer Auswerteeinheit zur Auswertung der zeitlichen Eigenschaften des akustischen Signals herzustellen.

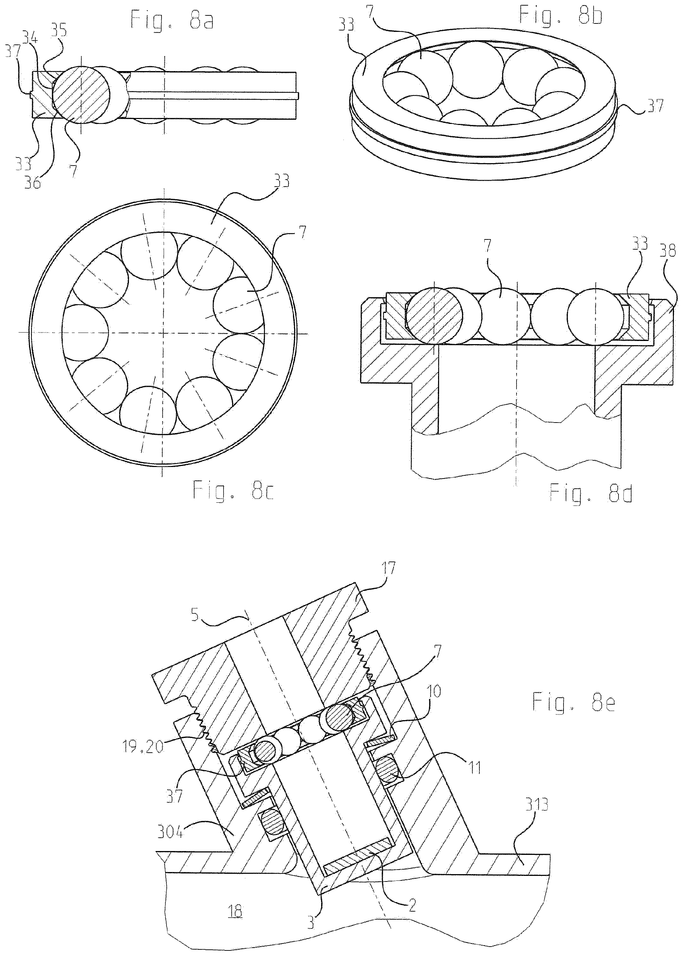

Die in Fig. 2-5 und 7 dargestellten Wälzlager 6 und 23 können einzeln angeordnet werden oder, besonders vorteilhaft, zur einfacheren Montage und Demontage der Montageanordnung einen Lagerring 33 aufweisen. Zwei bevorzugte von mehreren Ausführungsvarianten sind in den Fig. 8a) - e) und 9a)-d) dargestellt.

Wälzkörperkäfige und Lagerringe für Wälzkörper sind in vielfacher Weise bekannt. Sie werden genutzt um Reibungen von rotierenden Körpern gegenüber festen Lagerblöcken zu verringern. Um die Zwischenräume der Wälzkörper 7 z.B. vor Abrieb oder Verschmutzung zu schützen, weisen Wälzkörperlager zumeist einen inneren und einen äußeren Lagerring auf.

Da im vorliegenden Fall die Verschmutzung der Wälzkörperzwischenräume und Rotationsbewegungen keine primäre Bedeutung haben, kann ein Innenring bei dem Wälzlager 6 und 23 entfallen, wodurch sich eine Materialersparnis ergibt.
Der Lagerring 33 weist eine U-förmige Innenkontur 34 auf. Zwei Schenkel 35 und 36 liegen jeweils punktuell oder flächig auf der Oberfläche des jeweiligen Wälzkörpers 7 an. Der Umfang des Lagerrings 33 ist so bemessen, dass sich die Wälzkörper 7 gegeneinander verklemmen und in einem Presssitz vorliegen.

Der Lagerring 33 kann aus Metall bestehen. Hier sollte idealerweise auf eine gute Passgenauigkeit geachtet werden- Der Lagerring 33 kann allerdings bevorzugt aus einem Kunststoffmaterial bestehen. Dadurch wird der Schall zur Seite der Wälzkörper 7 hin zusätzlich gedämpft. Um größere Fertigungstoleranzen zu ermöglichen, kann der Lagerring aus einem Elastomer bestehen, so dass der Umfang des Lagerrings zur besseren Anordnung der Wälzkörper 7 geweitet werden kann.

Der Lagerring 33 weist an seinem Außenumfang einen umlaufenden Anschlagsring 37 auf, der den Bewegungsspielraum der Gesamtheit des Wälzlagers gegenüber der Axialachse der Ultraschall-Montageanordnung begrenzt. Die Bewegung des Wälzlagers radial zur Axialachse der Ultraschall-Montageanordnung ist durch eine Fassung 38 begrenzt, welche vorzugsweise Teil der Aufnahme 4 oder des Wandlergehäuses 3 ist.

In Fig. 8e) ist das in Fig. 8a)-8d) Wälzlager als Teil einer Ultraschallwandler-Montageanordnung dargestellt.

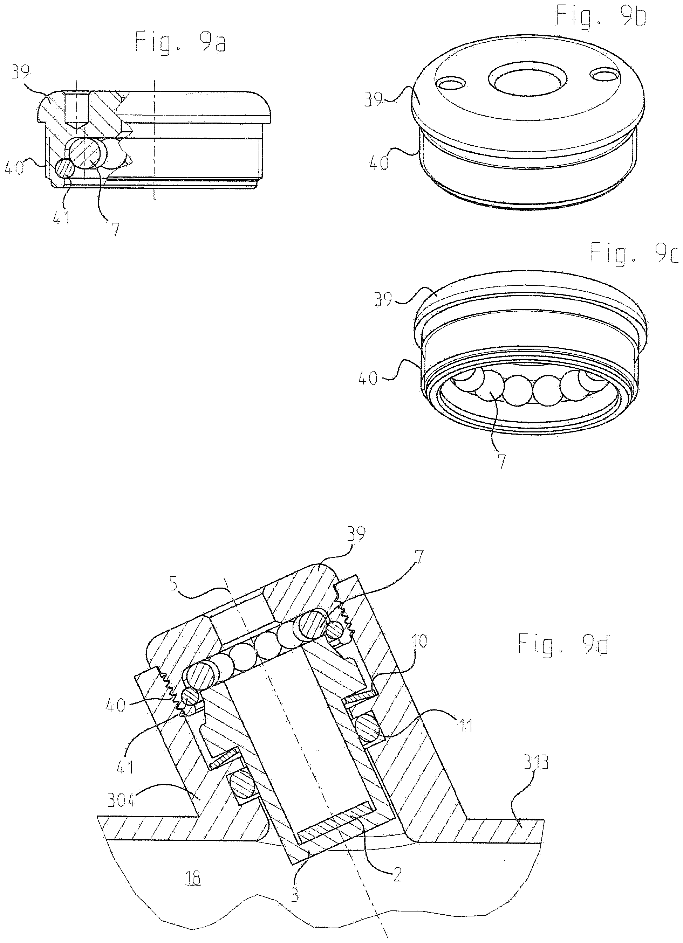

In Fig. 9 a) - d) ist ein Ausführungsbeispiel gezeigt, in weichem der Lagerring zugleich den Deckel 39 des Wandlergehäuses 3 bzw. den Niederhalter bildet. Die Wälzkörper 7 sind entlang des Innenumfangs des Lagerrings 39 bzw. des Deckels angeordnet und blockieren sich in radialer Richtung aufgrund ihres Eigenvolumens. In axialer Richtung wird die Bewegung der Wälzkörper durch einen Anschlag 41 verhindert. Dieser ist vorzugsweise umlaufend am Innenumfang des Deckels 39 angeordnet und kann beispielsweise als ein O-Ring aus einem Elastomer, z.B. Gummi, ausgebildet sein. Es ist aber auch denkbar einen entsprechenden Anschlag in den Deckel einzuformen, z.B. durch Tiefziehverfahren, oder am Innenumfang des Deckels anzuschweißen. Besonders bevorzugt weist der Deckel eine innenumfängliche Ringnut auf, in welche der O-Ring eingesetzt und damit positioniert ist.

Der Deckel weist zudem ein Außengewinde 40 auf, um mit dem restlichen Wandlergehäuse durch Verschrauben eine Einheit zu bilden. In Fig. 9d) ist eine Ultraschallwandler-Montageanordnung mit dem in Fig. 9a)-c) dargestellten Wälzlager dargestellt.

Es versteht sich, dass es sich bei dem in den Figuren 8 und 9 dargestellten Ausführungsvarianten nur um Beispiele handelt und andere geometrische Abwandlungen möglich sind.

### Bezugszeichenliste

- 1: Ultraschallwandler-Montageanordnung
- 2: Ultraschallwandlerelement
- 3: Wandlergehäuse
- 4: Aufnahmeeinheit
- 5: Längsachse bzw. Einspannstrecke
- 6: Erstes Wälzkörperlager
- 7: Wälzkörper
- 8: Erste Einspannfläche des Wandlergehäuses
- 9: Erste Einspannfläche der Aufnahmeeinheit
- 10: Tellerfeder
- 11: Erster O-Ring
- 12: Dämpfungselement
- 13: Messrohr
- 14: Rauschen
- 15: Akustisches Signal
- 16: Erster Zentrierring
- 17: Niederhalter
- 18: Medium
- 19: Erstes Gewinde
- 20: zweites Gewinde
- 21: Erste Schulter
- 22: Schulterring
- 23: Zweites Wälzkörperlager
- 24: Zweiter O-Ring
- 25: Zweite Schulter
- 26: Zweiter Zentrierring
- 27: Flansch des Wandlergehäuses
- 28: Zweite Einspannfläche des Wandlergehäuses
- 29: Zweite Einspannfläche der Aufnahmeeinheit
- 30: Rille
- 31: Spiralfeder
- 32: Zweite Rille
- 33: Lagerring
- 34: Innenkontur
- 35: Schenkel
- 36: Schenkel
- 37: Anschlag, z.B. Anschlagsring
- 38: Fassung
- 39: Deckel
- 40: Gewinde
- 41: Anschlag, z.B. O-Ring
- 42: Ringnut
- 304: Aufnahmeeinheit
- 308: Erste Einspannfläche des Wandlergehäuses
- 309: Erste Einspannfläche der Aufnahmeeinheit
- 313: Messrohr
- 322: Schulterring
- 325: Zweite Schulter
- 327: Flansch des Wandlergehäuses
- 328: Zweite Einspannfläche des Wandlergehäuses
- 329: Zweite Einspannfläche der Aufnahmeeinheit
- 330: Rille
- 404: Aufnahmeeinheit
- 408: Erste Einspannfläche des Wandlergehäuses
- 409: Erste Einspannfläche der Aufnahmeeinheit
- 422: Schulterring
- 427: Flansch
- 428: Zweite Einspannfläche des Wandlergehäuses
- 429: Zweite Einspannfläche der Aufnahmeeinheit
- 432: Rille
- 601: Ultraschallwandler-Montageanordnung
- 603: Wandlergehäuse
- 604: Aufnahmeeinheit
- 607: Wälzkörper
- 617: Niederhalter
- 611: O-Ring
- 627: Flansch

## Patentansprüche

1. Ultraschall-Durchflussmessgerät mit einer ersten Ultraschallwandler-Montageanordnung und einer zweiten Ultraschallwandler-Montageanordnung, welche Ultraschallwandler-Montageanordnung an einem Messrohr befestigt ist, wobei eine Ultraschallwandler-Montageanordnung umfasst:
ein Ultraschallwandlerelement (2),
ein Wandlergehäuse (3), in welchem das Ultraschallwandlerelement (2) angeordnet ist,
eine Aufnahmeeinheit (4; 304; 404; 604), wobei das Wandlergehäuse (3) in der Aufnahmeeinheit (4; 304; 404; 604) in einer Einspannstrecke
eingespannt ist,
**dadurch gekennzeichnet, dass**
die Einspannstrecke mindestens ein Wälzkörperlager (6, 23) mit mindestens einem Wälzkörper (7), insbesondere mindestens ein Kugellager mit mindestens einer Kugel, zur akustischen Entkopplung des Wandlergehäuses (3) von der Aufnahmeeinheit (4; 304; 404; 604) umfasst.

2. Ultraschall-Durchflussmessgerät nach Anspruch 1, wobei das Wandlergehäuse (3) mindestens eine erste Einspannfläche (8; 308; 408) und die Aufnahmeeinheit (4; 304; 404; 604) mindestens eine erste Einspannfläche (9; 309; 409) aufweist, und wobei ein Wälzkörperlager (6, 23) aus einer ersten Einspannfläche (8; 308;
408) des Wandlergehäuses (3) und einer ersten Einspannfläche (9; 309; 409) der Aufnahmeeinheit (4; 304; 404; 604) und Wälzkörpern (7) zwischen den beiden Einspannflächen (8; 308; 408, 9; 309; 409) gebildet ist.

3. Ultraschall-Durchflussmessgerät, nach Anspruch 1 oder 2, wobei die Wälzkörper (7) des Wälzkörperlagers (6, 23) fassförmig ausgebildet sind.

4. Ultraschall-Durchflussmessgerät, nach einem der Ansprüche 1 bis 3, wobei das Wandlergehäuse (3) in der Aufnahmeeinheit (4; 304; 404; 604) in der Einspannstrecke mittels mindestens einer Feder, insbesondere mittels mindestens einer Tellerfeder (10) und/oder mittels mindestens einer Schraubenfeder, vorgespannt ist.

5. Ultraschall-Durchflussmessgerät, nach einem der Ansprüche 1 bis 4, wobei die Wälzkörper (7) des Wälzkörperlagers (6, 23) Metall, Keramik, Kunststoff, Glas oder ein Komposit umfassen.

6. Ultraschall-Durchflussmessgerät, nach einem der Ansprüche 1 bis 5, wobei das Wandlergehäuse (3) eine erste und eine zweite Einspannfläche (8; 308; 408, 28; 328; 428) und die Aufnahmeeinheit (4; 304; 404; 604) eine erste und eine zweite Einspannfläche (9; 309; 409, 29; 329; 429) aufweist, und wobei ein erstes Wälzkörperlager (6) aus Wälzkörpern (7) zwischen der ersten Einspannfläche (8; 308; 408) des Wandlergehäuses (3) und der ersten Einspannfläche (9; 309; 409) der Aufnahmeeinheit (4; 304; 404; 604) gebildet ist und ein zweites Wälzkörperlager (23) aus Wälzkörpern (7) zwischen der zweiten Einspannfläche (28, 328, 428) des Wandlergehäuses (3) und der zweiten Einspannfläche (29; 329; 429) der Aufnahmeeinheit (4; 304; 404; 604) gebildet ist.

7. Ultraschall-Durchflussmessgerät nach einem der vorhergehenden Ansprüche, **dadurch gekennzeichnet, dass** das Wälzlager (6, 23) mehrere Wälzkörper (7) umfasst, welche durch einen Lagerring (33) oder einen insbesondere zylindrischen Deckel (39) gefasst sind.

8. Ultrasehall-Durchflussmessgerät nach Anspruch 7, **dadurch gekennzeichnet, dass** der Lagerring (33) oder der Deckel (39) eine Mittelachse aufweist und dass die Wälzkörper (7) derart gefasst sind, dass eine radiale Bewegung der Wälzkörper gegenüber der Mittelachse blockiert oder begrenzt ist.

9. Ultraschall-Durchflussmessgerät nach Anspruch 8, **dadurch gekennzeichnet, dass** die Blockade oder die Begrenzung entweder durch das Zusammenspiel der Wälzkörper (7) selbst erfolgt oder durch eine Mittelfassung, vorzugsweise einen Ring, insbesondere einen O-Ring (41), erfolgt, welcher innerhalb des Lagerrings (33) oder des Deckels (39) angeordnet ist.

10. Ultraschall-Durchflussmessgerät nach einem der Ansprüche 1 bis 6, wobei die Ultraschallwandler- Montageanordnung (1) an einem Messrohr (13) befestigt ist, wobei die Ultraschallwandler-Montageanordnung (1) mit einer Auswerteeinheit zur Auswertung der zeitlichen Eigenschaften des akustischen Signals (15) verbunden ist.

11. Ultraschall-Durchflussmessgerät nach Anspruch 10, wobei die Aufnahmeeinheit (4; 304; 404; 604) zumindest teilweise in das Messrohr (13) oder in den Behälter hinein ragt.

## Claims

1. Ultrasonic flowmeter with a first ultrasonic transducer mounting arrangement and a second ultrasonic transducer mounting arrangement, said ultrasonic transducer mounting arrangement being secured to a measuring tube,
wherein an ultrasonic transducer mounting arrangement comprises:
an ultrasonic transducer element (2),
a transducer housing (3) in which the ultrasonic transducer element (2) is arranged,
a reception unit (4, 304, 404, 604), wherein the transducer housing (3) is clamped in the reception unit (4, 304, 404, 604) in a clamping section,
**characterized in that**
the clamping section comprises at least one rolling element bearing (6, 23) with at least one rolling element (7), particularly at least one ball bearing with at least one ball for the acoustic decoupling of the transducer housing (3) from the reception unit (4, 304, 404, 604).

2. Ultrasonic flowmeter as claimed in Claim 1, wherein the transducer housing (3) comprises at least a first clamping surface (8, 308, 408) and the reception unit (4, 304, 404, 604) has at least a first clamping surface (9, 309, 409),
and wherein a rolling element bearing (6, 23) is formed from a first clamping surface (8, 308, 408) of the transducer housing (3) and a first clamping surface (9, 309, 409) of the reception unit (4, 304, 404, 604) and rolling elements (7) between the two clamping surfaces (8, 308, 408, 9, 309, 409).

3. Ultrasonic flowmeter as claimed in Claim 1 or 2, wherein the rolling elements (7) of the rolling element bearing (6, 23) have a barrel-like shape.

4. Ultrasonic flowmeter as claimed in one of the Claims 1 to 3, wherein the transducer housing (3) is pre-clamped in the reception unit (4, 304, 404, 604) in the clamping section by means of at least one spring, particularly by means of at least one cup spring (10) and/or by means of at least one coil spring.

5. Ultrasonic flowmeter as claimed in one of the Claims 1 to 4, wherein the rolling elements (7) of the rolling element bearing (6, 23) are made of metal, ceramic, plastic, glass or a composite.

6. Ultrasonic flowmeter as claimed in one of the Claims 1 to 5, wherein the transducer housing (3) has a first and a second clamping surface (8, 308, 408, 28, 328, 428) and the reception unit (4, 304, 404, 604) has a first and a second clamping surface (9, 309, 409, 29, 329, 429), and wherein a first rolling element bearing (6) is made from rolling elements (7) between the first clamping surface (8, 308, 408) of the transducer housing (3) and the first clamping surface (9, 309, 409) of the reception unit (4, 304, 404, 604) and a second rolling element bearing (23) is formed from rolling elements (7) between the second clamping surface (28, 328, 428) of the transducer housing (3) and the second clamping surface (29, 329, 429) of the reception unit (4, 304, 404, 604).

7. Ultrasonic flowmeter as claimed in one of the previous claims, **characterized in that** the rolling element bearing (6, 23) comprises several rolling elements (7), which are mounted by a bearing ring (33) or a cover (39), particularly cylindrical.

8. Ultrasonic flowmeter as claimed in Claim 7, **characterized in that** the bearing ring (33) or the cover (39) has a central axis and that the rolling elements (7) are mounted in such a way that a radial movement of the rolling elements in relation to the central axis is blocked or limited.

9. Ultrasonic flowmeter as claimed in Claim 8, **characterized in that** the blocking or the limitation is implemented either by the interaction of the rolling elements (7) themselves or by a central mount, preferably a ring, particularly an O-ring (41), which is arranged in the bearing ring (33) or the cover (39).

10. Ultrasonic flowmeter as claimed in one of the Claims 1 to 6, wherein the ultrasonic transducer mounting arrangement (1) is secured on a measuring tube (13), wherein the ultrasonic transducer mounting arrangement (1) is connected to an evaluation unit to evaluate the temporal properties of the acoustic signal (15).

11. Ultrasonic flowmeter as claimed in Claim 10, wherein the reception unit (4, 304, 404, 604) projects at least partially into the measuring tube (13) or into the container.

## Revendications

1. Débitmètre à ultrasons avec un premier arrangement de montage à convertisseur ultrasonore et un deuxième arrangement de montage à convertisseur ultrasonore, lequel arrangement de montage à convertisseur ultrasonore est fixé sur un tube de mesure,
un arrangement de montage à convertisseur ultrasonore comprenant :
un élément de convertisseur ultrasonore (2),
un boîtier de convertisseur (3), dans lequel est disposé l'élément de convertisseur ultrasonore (2),
une unité de réception (4, 304, 404, 604), le boîtier de convertisseur (3) étant serré dans l'unité de réception (4, 304, 404, 604) dans une section de serrage,
**caractérisé**
**en ce que** la section de serrage comprend au moins un palier à éléments roulants (6, 23) avec au moins un élément roulant (7), notamment au moins un roulement à billes avec au moins une bille, pour le découplage acoustique du boîtier de convertisseur (3) de l'unité de réception (4, 304, 404, 604).

2. Débitmètre à ultrasons selon la revendication 1, pour lequel le boîtier de convertisseur (3) comporte au moins une première surface de serrage (8, 308, 408) et l'unité de réception (4, 304, 404, 604) au moins une première surface de serrage (9, 309, 409),
et pour lequel un palier à éléments roulants (6, 23) est constitué d'une première surface de serrage (8, 308, 408) du boîtier de convertisseur (3) et d'une première surface de serrage (9, 309, 409) de l'unité de réception (4, 304, 404, 604) et d'éléments roulants (7) entre les deux surfaces de serrage (8, 308, 408, 9, 309, 409).

3. Débitmètre à ultrasons selon la revendication 1 ou 2, pour lequel les éléments roulants (7) du palier à éléments roulants (6, 23) sont en forme de fût.

4. Débitmètre à ultrasons selon l'une des revendications 1 à 3, pour lequel le boîtier de convertisseur (3) est précontraint dans l'unité de réception (4, 304, 404, 604) dans la section de serrage au moyen d'au moins un ressort, notamment au moyen d'au moins une rondelle-ressort (10) et/ou au moyen d'un ressort hélicoïdal.

5. Débitmètre à ultrasons selon l'une des revendications 1 à 4, pour lequel les éléments roulants (7) du palier à éléments roulants (6, 23) comprennent du métal, de la céramique, du plastique, du verre ou un composite.

6. Débitmètre à ultrasons selon l'une des revendications 1 à 5, pour lequel le boîtier de convertisseur (3) présente une première et une deuxième surfaces de serrage (8, 308, 408, 28, 328, 428) et l'unité de réception (4, 304, 404, 604) une première et une deuxième surfaces de serrage (9, 309, 409, 29, 329, 429), et pour lequel un premier palier à éléments roulants (6) constitué d'éléments roulants (7) est formé entre la première surface de serrage (8, 308, 408) du boîtier de convertisseur (3) et la première surface de serrage (9, 309, 409) de l'unité de réception (4, 304, 404, 604) et un deuxième palier à éléments roulants (23) constitué d'éléments roulants (7) est formé entre la deuxième surface de serrage (28, 328, 408) du boîtier de convertisseur (3) et la deuxième surface de serrage (29, 329, 429) de l'unité de réception (4, 304, 404, 604).

7. Débitmètre à ultrasons selon l'une des revendications précédentes, **caractérisé en ce que** le palier (6, 23) comprend plusieurs éléments roulants (7), lesquels sont montés à travers une bague de palier (33) ou un couvercle (39) notamment cylindrique.

8. Débitmètre à ultrasons selon la revendication 7, **caractérisé en ce que** la bague de palier (33) ou le couvercle (39) présente un axe médian et **en ce que** les éléments roulants (7) sont montés de telle sorte qu'un mouvement radial des éléments roulants par rapport à l'axe médian soit bloqué ou limité.

9. Débitmètre à ultrasons selon la revendication 8, **caractérisé en ce que** le blocage ou la limitation s'effectue soit par l'interaction des éléments roulants (7) eux-mêmes, soit par une monture centrale, de préférence une bague, notamment un joint torique (41), laquelle monture est disposée à l'intérieur de la bague de palier (33) ou du couvercle (39).

10. Débitmètre à ultrasons selon l'une des revendications 1 à 6, pour lequel l'arrangement de montage à convertisseur ultrasonore (1) est fixé sur un tube de mesure (13), l'arrangement de montage à convertisseur ultrasonore (1) étant relié avec une unité d'exploitation destinée à l'exploitation des caractéristiques temporelles du signal acoustique (15).

11. Débitmètre à ultrasons selon la revendication 10, pour lequel l'unité de réception (4, 304, 404, 604) s'étend au moins partiellement à l'intérieur du tube de mesure (13) ou du réservoir.
